# DEMANDE DE BREVET EUROPEEN

(11) **EP 2 159 747 A1**
(43) Date de publication de la demande: **03.03.2010**
(21) Numéro de dépôt: 09169179.0
(22) Date de dépôt: 01.09.2009
(51) Int. Cl.: G06Q 20/00

(54) **Procédé et système de communication et d'envoi sécurisés d'informations**

(30) Priorité: 01.09.2008 FR 0855843
(71) Demandeur: CE Participations, 75007 Paris (FR)
(72) Inventeur: Vignet, Cyril, 75016 PARIS (FR)
(74) Mandataire: Wagret, Frédéric

(57) **Abrégé**

Procédé de communication et d'envoi sécurisés d'information, notamment pour des opérations commerciales , entre un expéditeur (1) et un destinataire (3), du type comportant un moyen d'identification de l'expéditeur et/ou le destinataire, est **caractérisé en ce qu**'il comprend les étapes de : (i) envoi par l'expéditeur à une première entité intermédiaire (2) qui lui est liée d'un message contenant ladite information ; (ii) authentification de l'expéditeur par ladite première entité intermédiaire ; (iii) formatage et cryptage de l'information par ladite première entité intermédiaire, le formatage assurant l'identification de ladite information et garantissant l'authentification de ladite première entité en tant que prochain émetteur de l'information ; (iv) transmission par un moyen de communication sécurisé de ladite l'information formatée et cryptée vers au moins une deuxième entité intermédiaire (4) liée audit destinataire ; (v) traitement de l'information reçue par la deuxième entité ; et (vi) transmission de l'information traitée qui est retranscrite sous la forme d'un message depuis la deuxième entité vers le destinataire.

## Description

La présente invention concerne un procédé et un système destinés à permettre la communication entre deux entités, et l'envoi, sous forme sécurisée, d'une information. On entend dans la suite de la description par « information », combinés ou non, tous types d'éléments écrits que ce soit sous forme de chiffres et/ou lettres et/ou idéogrammes, et/ou tous types de fichiers électroniques.

Bien que l'invention puisse s'appliquer à de nombreux domaines, elle trouve une application particulièrement avantageuse à la communication d'informations et le domaine commercial c'est-à-dire entre entités économiques, personnes physiques et/ou personnes morales. De telles informations sont relatives par exemple à des opérations du type envoi bon de commande, réception de bon de livraison, éléments d'agenda, informations commerciales, avis de transfert bancaire, avis de virement de compte à compte, notification de prélèvement automatique, autorisation de prélèvement automatique, envoi de factures, échéancier de prélèvement, effets de commerce, avis de paiement, bulletins de paye, etc...

L'échange d'informations, appelé aussi message, que ce soit par le réseau Internet ou en utilisant des réseaux privés soulève plusieurs préoccupations.

Les utilisateurs requièrent un échange rapide, quelque soit la taille des documents et informations transmis.

En outre, la sécurité et la confidentialité doivent être assurées avec fiabilité, et ce d'autant plus s'agissant d'informations commerciales, en particulier bancaires ou liées à la vie privée.

Enfin, y compris dans le cas d'utilisation de réseaux privés de communication, les utilisateurs souhaitent bénéficier de l'avantage et des caractéristiques de l'Internet à savoir, la simplicité de la transmission entre différentes entités, l'utilisation de logiciels standardisés et conviviaux, quel que soit leur taille, leur fonctionnement, leur nombre, etc....

Or, les contraintes mentionnées ci-dessus sont contradictoires. En effet, la confidentialité, l'identification et l'authentification des acteurs conduisent à complexifier l'utilisation et la mise en oeuvre, voir ralentir la transmission, et en toute hypothèse imposent des règles à l'émetteur et au récepteur, ce qui réduit en fait les possibilités de transmission et communication.

Ces communications se heurtent à plusieurs difficultés.

La première difficulté provient de la nécessité d'identifier et d'authentifier l'expéditeur et le destinataire avec certitude. En utilisant la messagerie Internet, il est malheureusement possible de facilement simuler l'adresse d'un expéditeur. Par ailleurs, si des méthodes d'authentification sont mises en places, celles-ci doivent être choisies de concert entre l'expéditeur et le destinataire pour fonctionner. Pour un ensemble d'entités économiques, ceci conduirait à utiliser une unique méthode d'authentification, imposant des moyens techniques unifiés, ce qui n'est pas envisageable à grande échelle.

Si l'expéditeur utilise une seule méthode d'authentification pour ses messages il est donc important que le destinataire puissent utiliser une méthode sans pour autant que celle-ci soit la même que celle de l'expéditeur.

La seconde difficulté est de pouvoir atteindre le maximum de destinataires possibles avec le minimum de systèmes techniques : Internet permet cela mais ne résout pas la première difficulté d'authentification.

Bien que les réseaux privés garantissent identification et authentification, ils sont cependant très limités dans leur capacité de fédérer des centaines de millions de clients. En outre, ils imposent un choix unique qui n'est parfois pas forcément adaptable à tous les utilisateurs du réseau.

Par conséquent, il n'existe pas de moyens à ce jour qui combinent les qualités d'Internet (simplicité et mise en relation de millions de destinataires et d'expéditeurs) tout en offrant l'identification et l'authentification des expéditeurs et des destinataires.

Or, dans le domaine commercial, par exemple, ce besoin est important compte tenu du très grand nombre d'opérations effectuées (en France par exemple, il s'effectue plusieurs dizaines de milliards d'opérations bancaires par an), et dans le cadre de la mondialisation ce besoin dépasse très largement le cercle fermé des destinataires et expéditeurs en France.

Dans ces conditions, on comprend que le besoin se fait ressentir d'un système et d'un procédé de communication, et plus particulièrement dans le domaine commercial, entre deux entités économiques et/ou entre particuliers, qui soit simple à mettre en oeuvre, qui permette d'identifier et d'authentifier l'expéditeur et le destinataire en préservant la confidentialité, tout en n'imposant pas directement à l'expéditeur et au destinataire des moyens techniques normés et unitaires.

A cette fin, selon l'invention, le procédé d'échange de communication et d'envoi sécurisés d'information par un réseau de communication informatisé sécurisé, entre un expéditeur et un destinataire, du type comportant un moyen d'identification et d'authentification de l'expéditeur et/ou du destinataire, est caractérisé en ce qu'il comprend les étapes de : (i) envoi par l'expéditeur à une première entité intermédiaire qui lui est liée d'un message contenant ladite information ; (ii) authentification de l'expéditeur par ladite première entité intermédiaire ; (iii) formatage et cryptage de l'information par ladite première entité intermédiaire grâce à des moyens techniques de signature et de cryptage, le formatage assurant l'identification de ladite information et garantissant l'authentification de ladite première entité en tant que prochain émetteur de l'information ; (iv) transmission par un moyen de communication sécurisé de ladite l'information formatée et cryptée vers au moins une deuxième entité intermédiaire liée audit destinataire ; (v) traitement de l'information reçue par la deuxième entité ; et (vi) transmission de l'information traitée qui est retranscrite sous la forme d'un message depuis la deuxième entité vers le destinataire.

Ce procédé permet ainsi de transmettre une information d'un expéditeur vers un destinataire de manière totalement sécurisée sans que l'expéditeur, ni le destinataire n'aient besoin de mettre en place des moyens techniques adaptés de sécurisation et d'authentification selon un protocole qui leur soit commun. Ce procédé ne nécessite aucun lien contractuel pour la transmission de l'information entre l'expéditeur et le destinataire final, ce qui facilite toutes sortes de transaction. Seules les entités intermédiaires qui sont garantes respectivement de l'expéditeur et du destinataire sont chargées de la mise en oeuvre de la communication de l'information, cette communication étant ainsi sécurisée, et l'information étant assurée d'arriver à destination.

Dans un exemple d'application de l'invention, les entités intermédiaires sont des banques dont l'expéditeur et le destinataire sont respectivement clients.

Dans un autre exemple d'application de l'invention, les entités intermédiaires sont des opérateurs de téléphonie fixe ou mobile dont l'expéditeur et le destinataire sont respectivement clients.

Selon une caractéristique de l'invention, une information se présente sous la forme d'un message électronique dont les adresses électroniques, du type adresses de courriel ou d'URL (Uniform Resource Locator), des entités intermédiaires sont formatée et cryptées et dont le corps du message électronique contenant la teneur de l'information est formaté et crypté. Bien entendu, l'envoi de plusieurs informations sous forme d'une pluralité de messages électroniques est possible et peut être simultanée.

Le moyen de communication de l'information formatée et cryptée entre les deux entités intermédiaires consiste en Internet ou en des réseaux privés de communication.

Avantageusement, l'information formatée et cryptée comporte le moyen d'identification de l'expéditeur et/ou de l'émetteur, notamment à partir de noms, chiffres, qui sont codifiés ou non, pris ou non en combinaison, de préférence du type numéro I.B.A.N (Internationnal Bank Account Number qui est un numéro de compte bancaire normalisé ), numéro BIC (Bank Indentification Code, qui est un numéro d'identification des banques), numéro BIN (Bank Indentification number, qui est un numéro d'identification des banques utilisé dans le domaine des cartes de paiement), numéro P.A.N (Primary Account Number, qui codifie des numéros de cartes de paiement), ou numéro de téléphone. De préférence, ledit moyen d'identification est inclus dans le corps du message électronique.

Selon une caractéristique importante de l'invention, ledit message électronique, du type courriel, comporte deux adresses électroniques, l'une de la première entité intermédiaire émettrice et l'autre de la deuxième entité intermédiaire réceptrice. Chacune des adresses comporte:
- la partie locale (c'est-à-dire avant le sigle @) contient un intitulé sous forme abrégée qui identifie la nature de l"information ; et
- le nom de domaine (c'est-à-dire après le sigle @) contient un sous-domaine, le radical et son extension.

La partie locale est un terme descriptif, de préférence normé, de la nature de l'opération correspondant au message électronique envoyé/reçu. Par exemple, ledit terme descriptif peut être : avis d'échéance, relance, facture, effets de commerce, autorisation de prélèvement, réclamations, échéance, acceptation de devis, facture associée à un paiement par carte, informations commerciales complémentaires, etc...

De manière à garantir la confidentialité de l'entité émettrice et/ou de l'expéditeur, la partie locale de l'adresse électronique de la première entité intermédiaire ne doit pas comprendre d'expression simplifiée pour ne pas permettre d'identifier directement l'entité émettrice du message électronique et/ou l'expéditeur.

L'intitulé du sous-domaine dans l'adresse électronique de la première entité intermédiaire émettrice, authentifie l'émetteur de l'information, notamment sous forme d'un code alphanumérique, et en particulier comprenant le numéro BIC ou BIN correspondant au code d'identification bancaire standardisé de l'entité intermédiaire émettrice, ou dans une application de téléphonie, le code pays et le code réseau pour l'indentification standardisée d'une entité émettrice de type opérateur de téléphonie.

L'intitulé du sous-domaine dans l'adresse électronique de la deuxième entité intermédiaire réceptrice, identifie le récepteur de l'information, notamment sous forme d'un code alphanumérique, et en particulier comprenant le numéro BIC ou BIN correspondant au code d'identification bancaire standardisé de l'entité intermédiaire réceptrice, ou dans une application de téléphonie, le code pays et le code réseau pour l'identification standardisé d'une entité émettrice de type opérateur de téléphonie.

L'intitulé du radical inclut un terme ou expression « commerciale » définissant ou correspondant au service de communication utilisé par l'invention ; ce terme ou expression peut être de fantaisie, c'est-à-dire de libre choix d'expression, constitué d'une marque par exemple, et est destiné à identifier les entités intermédiaires utilisant le procédé de communication revendiqué.

Selon une autre caractéristique, le corps du message électronique correspond à la teneur dans son ensemble de l'information. C'est lui qui contient de préférence le moyen d'identification du destinataire, par exemple les coordonnées bancaires du destinataire (numéro de carte bancaire, numéro de téléphone complet), et avantageusement l'identification de l'expéditeur, par exemple par son nom, son numéro de compte bancaire.

Pour faciliter la communication et le traitement des messages entre institutions et/ou organismes, et/ou banques, et notamment dans le but d'un traitement automatique et sécurisé entre ordinateurs, le procédé inclut la préparation par l'entité intermédiaire émettrice d'un corps ou contenu du message électronique dans un format normé, du type par exemple XML, et la création par l'entité intermédiaire d'une « enveloppe » destinée à « encapsuler » et crypter ledit contenu du message électronique, afin d'assurer sa transmission, de sécuriser cette transmission et sans altérer ledit contenu.

L'invention concerne également un ensemble pour la transmission d'informations entre un expéditeur et un destinataire, par le biais de deux entités intermédiaires liées respectivement audit expéditeur et audit destinataire, caractérisé en ce qu'il comporte :
- un moyen de communication entre l'expéditeur et son entité intermédiaire, au libre choix de l'entité intermédiaire et/ou de l'expéditeur -
   un moyen de traitement de l'information par l'entité intermédiaire de l'expéditeur sur la base d'une information formatée et sécurisée, du type message électronique sécurisé dont la structure des adresses électroniques de chacune des entités intermédiaires est imposée ;
- un moyen de communication, de l'information formatée et sécurisée, entre l'entité intermédiaire de l'expéditeur et l'entité intermédiaire du destinataire ;
- un moyen de communication entre l'entité intermédiaire du destinataire et le destinataire au libre choix de l'entité intermédiaire et/ou du destinataire.

Un tel ensemble permet de mettre en oeuvre le procédé de l'invention.

Par ailleurs, le procédé et le dispositif de l'invention sont aptes à fonctionner de manière réversible, à savoir en transmettant les messages (par exemple de confirmation et/ou de réponse) depuis le destinataire (devenu expéditeur) vers expéditeur (devenu destinataire).

Une telle communication, de l'expéditeur vers le destinataire, via leurs banques respectives, permet d'être informé de manière rapide et fiable de la nature et des éléments relatifs à l'opération effectuée ou à des opérations en cours de réalisation. Plus précisément, dans le cas d'un virement par exemple, ceci permet au destinataire d'être mis au courant immédiatement dés que l'ordre a été passé sans avoir à attendre que la somme convenue ait été créditée sur son compte.

Cette communication, selon invention, peut ne pas se limiter à une information aussi simple, mais peut inclure toute information relative à l'information en question, ou l'envoi des fichiers. Par exemple, les messages peuvent être utilisés en cas de difficultés inhérentes à l'opération elle-même, par exemple erreur de transcription d'un chiffre, ou tout autre élément ou action annexe rendue nécessaire pour le bon accomplissement de l'opération souhaitée. La communication par les courriers électroniques spécifiques de l'invention facilite de manière très sensible la communication, notamment entre les banques pour résoudre les problèmes éventuels et/ou rendre l'opération la plus simple et la plus rapide possible.

L'invention sera bien comprise à la lumière de la description qui suit, se rapportant à des exemples illustratifs, mais non limitatifs, en référence aux dessins annexés dans lesquels :
-- la figure 1 est une représentation schématique de communication selon l'invention, entre un expéditeur et un destinataire ;
-- la figure 2 montre une représentation schématique de communication selon des détails de mise en oeuvre de l'invention ;
-- la figure 3 est une représentation schématique du procédé et système de l'invention appliqués au règlement de factures, entre un créancier et son client ;
-- la figure 4 montre schématiquement le procédé et le système de l'invention appliqués à l'envoi de messages de gestion entre banques.

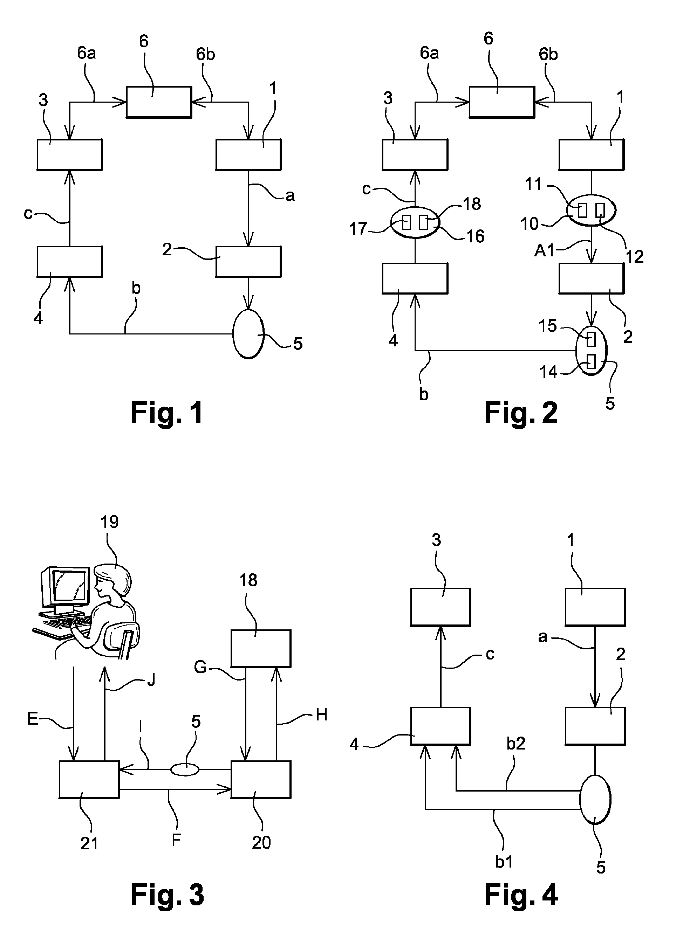

Dans la description qui suit, en référence aux figures 1 à 4, les entités, qu'elles soient destinataire, expéditeur, banque, créancier, client, organismes, etc. sont représentés par des blocs fonctionnels rectangles pour des raisons de commodité.

En référence à la figure 1, on a représenté des blocs reliés par des flèches qui symbolisent la communication de messages et informations.

Le procédé de communication, selon l'invention, met en oeuvre un système de communication comportant une fonction d'identification et d'authentification de l'expéditeur, une fonction d'identification du destinataire, un système d'adressage des échanges d'informations entre l'expéditeur et le destinataire.

Selon l'invention, l'authentification de l'expéditeur est assurée par une entité intermédiaire ayant un lien avec l'expéditeur, et l'identification du destinataire est assurée par une deuxième entité intermédiaire ayant un lien avec le destinataire.

La communication d'information selon le procédé de l'invention est illustrée sur la figure 1 et décrite ci-après quant à des entités intermédiaires qui sont ici constituées à titre d'exemple par des établissements bancaires.

Dans le cadre par exemple d'une transaction bancaire, l'invention permet la communication de l'expéditeur avec sa banque, des banques entre elles et du destinataire avec sa banque, d'une manière sécurisée, rapide et sans obligation de liens contractuels ou techniques, que ce soit au niveau des moyens de communication ou des moyens de sécurité, entre l'expéditeur et le destinataire.

Le but est donc de permettre à l'expéditeur, aux deux banques, et au destinataire de communiquer des informations et/ou des fichiers relatifs à l'opération en question en toute sécurité et très rapidement. Par exemple, dans le cas d'un virement, cette communication permet au destinataire de savoir de manière quasi instantanée que l'expéditeur a donné l'ordre de transférer ou virer la somme convenue à son compte en banque.

Un expéditeur représenté par le bloc 1 transmet à sa banque (bloc 2) par des moyens de communication représentés par la flèche a, un message incluant l'ensemble des informations qu'il souhaite transmettre à un destinataire représenté par le bloc 3, tel que par exemple un message concernant la nature de l'opération, les explications complémentaires, ou toute autre information et/ou fichier L'opération est par exemple un avis de virement ou un avis de transfert dont le bénéficiaire est le destinataire 3 qui doit au final être informé du virement ou du transfert précité.

La banque de l'expéditeur (bloc 2) analyse ce message et le transforme sous la forme d'une information formatée et sécurisée de demande de virement, en utilisant un système d'authentification et de cryptage (aire 5). La banque 2 adresse ensuite (flèche b) à la banque du destinataire (bloc 4) cette information formatée et cryptée. Enfin, la banque du destinataire 4 adresse au destinataire 3 (flèche c) un message l'informant de la nature du message, de son contenu, ou pour transmettre les informations souhaitées qui proviennent de l'expéditeur, par exemple en l'informant de l'opération de virement au bénéfice de son compte bancaire. Le virement en tant que tel associé à l'opération décrite n'est pas représenté, celui-ci s'effectuant de manière connue et habituelle.

La transaction commerciale, symbolisée par le bloc 6 relié par des flèches à double sens 6a et 6b, à l'expéditeur 2 et au destinataire 3, donne ainsi lieu à une opération, un avis de paiement par exemple, via le procédé et système de communication de l'invention.

La transmission du message de l'expéditeur 1 à sa banque 2 se fait par tous moyens de communication tels que par courrier, téléphone, télécopie, ou moyens électroniques de communication du type Internet, sous forme de courriel, SMS, MMS, etc...La banque 2 qui est garante de son client, l'expéditeur 1, se charge de transmettre de manière sécurisée et directement authentifiable l'information à la banque 4 qui est garante du compte bancaire de son client, le destinataire 3.

L'information est « formatée », en ce sens qu'elle est directement authentifiable par un procédé de signature associé à un procédé de cryptage ; la banque 4 identifie automatiquement, à réception de l'information, la véracité de l'identité de la banque émettrice d'une part, et l'intitulé de la teneur de l'information d'autre part.

L'information est « sécurisée », en ce sens qu'elle est communiquée de manière cryptée selon un protocole de cryptage commun aux deux banques.

La banque 2 de l'expéditeur réalise grâce au système technique d'authentification et de cryptage 5, le formatage et le cryptage de l'information. L'information se présente sous forme d'un courrier électronique (courriel) qui est donc destiné à être envoyé par la banque émettrice ayant une boîte aux lettres électronique propre, à la banque réceptrice ayant également sa boîte électronique propre. L'acheminement de l'information se fait via des moyens techniques de communication que sont Internet ou des réseaux privés de communication.

A noter que les boîtes aux lettres électroniques des entités intermédiaires sont hébergées de manière sécurisée par des systèmes techniques adaptés.

Ainsi, le message initial provenant de l'expéditeur est traité pour obtenir l'information sous forme de message électronique du type courriel par deux actions :
- le contenu du courriel de l'expéditeur est « ré-écrit » de façon normée, par exemple sous un schéma du type XML et crypté pour ne pas être accessible aux tiers. Il constitue alors le corps du courriel contenant la teneur de l'information sous forme cryptée;
- l'enveloppe courriel est créée de manière à en quelque sorte « encapsuler » ledit contenu et à la formater selon deux adresses électroniques spécifiques à l'invention, respectivement liées à l'entité intermédiaire émettrice et à l'entité intermédiaire réceptrice.

Les adresses électroniques définissent d'une part, l'intitulé abrégé de l'information, et assure d'autre part l'authentification de l'information.

Plus précisément, chaque adresse électronique s'écrit de la manière suivante : type-d'information@IDentité.nomcommercial.ext, et à titre d'exemple :
Avis-de-virement@BIC.nomcommercial.eu

Comme toute adresse électronique, elle comporte une partie locale (ici, « type-d'information ») avant le sigle @ et un nom de domaine après le sigle @. Le nom de domaine se décompose en un nom de sous-domaine (ici « IDentité »), un radical (ici « nomcommercial ») et une extension (ici « ext. »). Le radical est de manière usuelle enregistré auprès d'un organisme de gestion habilité à gérer les extensions de noms de domaine.

### Plus précisément selon l'invention :

La partie locale identifie par son seul intitulé le type d'information échangée, c'est-à-dire la nature de l'opération en question, par exemple un avis de virement, un avis de transfert bancaire, une autorisation de prélèvement etc... Un lexique de tous les types d'informations est de préférence établi entre banques pour codifier de manière uniforme les intitulés.

Le nom de sous-domaine établit l'identité de l'entité intermédiaire réceptrice ou émettrice.

Pour l'adresse électronique représentant l'entité émettrice, l'intitulé choisi du sous-domaine et la clé de cryptage associée authentifient son identité, tandis que le sous-domaine de l'adresse électronique de l'entité réceptrice inclut un intitulé l'authentifiant. Ainsi, ces noms de sous-domaines associés aux clés de cryptage permettent de garantir à l'entité réceptrice que l'identité intermédiaire émettrice est connue et validée de sorte que le courriel est immédiatement authentifié et est effectivement destiné à la deuxième entité.

Le nom de sous-domaine est codifié entre les entités intermédiaires. Il s'agit par exemple d'un code alphanumérique. Pour les banques, ce code peut être de manière non limitative le BIC (Code universel d'identification des banques) ou le BIN (Bank Identification Number) correspondant aux six premiers chiffres de l'IBAN (International Bank Account Number). Pour les opérateurs de téléphonie, ce code peut-être de manière non limitative le numéro de téléphone complet, c'est-à-dire incluant le code pays en préfixe.

Le radical du nom de domaine « nomcommercial » est le nom ou terme, de fantaisie ou constituant une marque, donnée par les entités intermédiaires, à savoir les banques en l'espèce, aux procédé et système de communication de l'invention.

Ainsi, le nom de domaine des adresses électroniques qui contient à la fois l'identifiant de la banque réceptrice/émettrice et le nom du protocole sécurisé de communication permettent à la banque réceptrice d'être assurée que le courrier électronique (courriel) qui lui est adressé n'est pas fallacieux. L'authenticité de la banque émettrice est garantie par le contrôle des clés de sécurité.

Le corps du courrier électronique comporte l'ensemble de la teneur de l'information (explications écrites de l'opération et/ou fichiers joints). Ce corps de courrier est crypté au moyen d'un procédé de cryptage adapté et de type connu, par exemple le standard S/M.I.M.E. (Secure / Multipurpose Internet Mail Extensions).

Le corps du courrier électronique contient l'identification du destinataire à qui l'information est destinée. Cette identification peut être réalisée de différentes manières, à partir de noms, chiffres, qui sont codifiés ou non, qui sont éventuellement pris en combinaison. De manière non limitative pour des banques, on peut utiliser le numéro I.B.A.N. (International Bank Account Number), le numéro BIC, le BIN qui est un constituant du numéro de carte bancaire, du P.A.N. (Personnal Authenfication Number) basé sur la carte bancaire pour un particulier, ou un numéro de compte société pour une entreprise ou le numéro de téléphone pour les opérateurs de téléphonie.

L'expéditeur est également identifié dans le corps du courriel si nécessaire avec les éléments équivalents à ceux du destinataire.

La banque 4 reçoit donc l'information formatée et cryptée sous forme de courrier électronique tel qu'exprimé ci-dessus. Dès réception, la banque est assurée de l'authenticité de l'origine de l'information en provenance d'une autre banque par le contrôle des clés de cryptage et de signature. Si l'information à échanger contient des instructions pour des opérations bancaires à effectuer, la banque 4 peut alors les effectuer immédiatement sans nécessiter des vérifications supplémentaires de sécurité. La banque 4, dans le même temps, transforme l'information reçue en un format correspondant aux normes de communication commerciales de ladite banque avec son client, le destinataire final 3. L'information retranscrite est enfin transmise au destinataire par tout mode de communication connu, de préférence par courrier électronique, l'informant par exemple qu'un virement a eu lieu sur son compte par l'expéditeur 1.

A noter que les messages de banques à banques peuvent être utilisés en cas de difficultés inhérentes à une opération bancaire elle-même, par exemple erreur de transcription d'un chiffre, ou tout autre élément ou action annexe rendue nécessaire pour le bon accomplissement de l'opération souhaitée.

La communication par de tels courriels selon l'invention facilite de manière très sensible la communication, notamment entre les banques pour résoudre les problèmes éventuels et/ou rendre l'opération la plus simple et la plus rapide possible.

On décrit ci-après en référence aux figures 2 à 4, des exemples d'application du procédé et du système selon invention, pour des opérations diverses telles que règlement de facture, envoi de messages de gestion entre banques, préavis de paiement, et mandat.

En référence à la figure 2, on a représenté une vue similaire à la figure 1.

On retrouve sur cette figure 2 des éléments communs avec la figure 1, et notamment l'expéditeur 1, la banque de l'expéditeur 2, le destinataire 3 et la banque du destinataire 4.

La figure 2 montre les domaines ou espaces dans lesquels des règles particulières sont utilisées, en fonction de l'émetteur et du récepteur du message ou de l'envoi.

Ainsi, la communication (flèche A1) entre un expéditeur 1 (client) et sa banque 2 fait appel à des notions normées et convenues par la banque, à savoir : la signature, norme de présentation de l'information (numéro de compte, etc....). Ces conventions sont symbolisées par un domaine 10 représenté par un cercle, dans lequel au moins deux normes ou conventions sont établies, par exemple les règles relatives à la signature, bloc 11, et les règles d'adressage, bloc 12.

Pour ce qui est de la communication entre banques, aire 5, on retrouve les éléments décrits en regard de la figure 1 et qui font appel à des normes ou conventions définies entre banques, qui sont donc « transparentes » pour l'expéditeur, à savoir les normes définissant les adresses électroniques des entités intermédiaires réceptrice/émettrice, bloc 14, celle-ci étant du type : type-d'information@IDentité.nomcommercial.eu. Cet espace de communication fait appel à des règles de cryptage (par exemple S/M.I.M.E.), des conventions bilatérales de signatures préenregistrées, et autres normes, formats, convenus entre les banques, bloc 15.

Enfin, dans le cadre de la communication entre le destinataire 3 et sa banque 4, définies par l'espace de communication représenté par un cercle 16, le procédé et le dispositif de l'invention font appel à des conventions, accords ou autres, symbolisés par les blocs 17 et 18, similaires respectivement aux blocs 11 et 12 de l'espace de communication 10 entre l'expéditeur 1 et sa banque 2.

L'ensemble de ces éléments de communication a pour origine des transactions commerciales symbolisées par le bloc 6, et les flèches 6a et 6b entre l'expéditeur 1 et le destinataire 3, comme expliqué ci-dessus en regard de la figure 1.

En regard maintenant de la figure 3, on décrit un exemple d'application du procédé et du système de l'invention à un règlement de factures entre un créancier ou fournisseur 18, et un client ou débiteur 19, symbolisé par un personnage devant un ordinateur. Les banques respectives du créancier et du débiteur sont représentées par les blocs 20 et 21.

Tout d'abord le fournisseur ou créancier 18 envoie une facture à sa banque 20 selon la flèche G.

La banque du créancier 20 utilise alors le système d'authentification et de cryptage 5 selon l'invention pour la préparation d'un courrier électronique du type : demande.règlement@BIC.nomcommercial.eu. De manière expliquée ci-dessus, la banque 20 prépare le contenu du message à envoyer à la banque du débiteur 21, sous format XML, puis « encapsule » le message, puis crypte le message, puis envoi ledit courrier électronique, flèche 1, à la banque 21 du débiteur.

Dans l'étape suivante, la banque du débiteur 21, flèche J, demande à son client, le débiteur 19, de donner son accord sur le règlement en question. Une fois l'accord obtenu selon la flèche E, la banque du débiteur 21 peut générer un virement selon les systèmes bancaires existants et connus.

Dans cet exemple, il est possible également, bien que ceci ne soit pas représenté, de réaliser une automatisation poussée de l'utilisation des moyens de paiement connus sous l'acronyme TIP. En outre, cet exemple peut également être appliqué aux virements sous compte séquestre, en informant l'entité ou la personne destinataire des fonds.

En référence à la figure 4, on a représenté un exemple de mise en oeuvre de l'invention à l'envoi de messages de gestion entre banques, et plus particulièrement pour permettre de régler des difficultés ou des erreurs, et plus précisément un virement effectué en double. Le donneur d'ordre 1 envoi à sa banque 3 un message, flèche a, à sa banque, dite banque du débiteur, donnant ordre de virer une certaine somme au bénéfice d'un créancier 3, client de la banque 4. Comme explicitée ci-dessus, selon le procédé et le système de communication de l'invention, le virement est effectué d'une banque à l'autre.

Dans l'exemple montré, deux virements ont été effectués, dont un justifié (flèche b1) et un autre en doublon (flèche b2) qui n'avait pas lieu d'être.

Les banques respectives 2 et 4 communiquent entre elles, via le système de l'invention, tel que décrit ci-dessus, pour régler le problème (courrier électronique du type «virement.doublevirement@BIC.nomcommercial.eu» ).

De la même manière, le procédé et le dispositif de l'invention sont applicables aussi à des opérations de préavis de paiement, et d'autorisation de prélèvement.

## Revendications

1. Procédé de communication et d'envoi sécurisés d'information, notamment pour des opérations commerciales, entre un expéditeur (1) et un destinataire (3), du type comportant un moyen d'identification et d'authentification de l'expéditeur et/ou le destinataire, comprenant les étapes de : (i) envoi, par l'expéditeur à une première entité intermédiaire (2) qui lui est liée, de ladite information ; (ii) authentification de l'expéditeur par ladite première entité intermédiaire ; (iii) formatage et cryptage de l'information par ladite première entité intermédiaire ; (iv) transmission par un moyen de communication sécurisé de ladite l'information formatée et cryptée vers au moins une deuxième entité intermédiaire (4) liée audit destinataire ; (v) traitement de l'information reçue par la deuxième entité ; et (vi) transmission de l'information traitée depuis la deuxième entité vers le destinataire, **caractérisé en ce que** l'information se présente sous la forme d'un message électronique dont les adresses électroniques (du type adresses de courriel ou d'URL) des entités intermédiaires sont formatées et cryptées et dont le corps contenant la teneur de l'information est formaté et crypté, et **en ce que** les adresses électroniques incluent dans le radical du nom de domaine :
• Soit un terme ou expression « commerciale » du type marque définissant ou correspondant au procédé de communication mis en oeuvre par les entités intermédiaires.
• Soit un terme descriptif, de préférence normé, de la nature de l'opération correspondant au message électronique envoyé/reçu, tel que avis d'échéance, relance, facture, effets de commerce, autorisation de prélèvement, réclamations, échéance, acceptation de devis.

2. Procédé selon la revendication 1, **caractérisé en ce que** les adresses électroniques du type adresses de courriel incluent dans la partie locale un intitulé identifiant la nature de l'information, et dans le nom de domaine, un sous-domaine dont l'intitulé identifie chacune des entités intermédiaires émettant et respectivement recevant l'information, notamment sous forme d'un code alphanumérique, et en particulier comprenant le numéro BIC ou BIN ou préfixe téléphonique.

3. Procédé selon l'une des revendications 1 ou 2, **caractérisé en ce que** ladite information formatée et cryptée comporte le moyen d'identification de l'expéditeur et/ou de l'émetteur, notamment à partir de noms, chiffres, qui sont codifiés ou non, pris ou non en combinaison, de préférence du type numéro I.B.A.N., numéro BIC, numéro BIN, numéro P.A.N., numéro de téléphone.

4. Procédé selon l'une des revendications 2 ou 3, **caractérisé en ce que** le corps du message électronique contient le moyen d'identification du destinataire, et éventuellement de l'expéditeur.

5. Procédé selon l'une des revendications 1 à 4, **caractérisé en ce que** la première entité intermédiaire prépare le contenu du message électronique dans un format normé, du type par exemple XML, et prépare une « enveloppe » destinée à « encapsuler » ledit contenu du message de manière sécurisée, afin d'assurer sa transmission d'une manière sécurisée et sans altérer ledit contenu.

6. Ensemble pour la transmission d'informations entre un expéditeur et un destinataire, par le biais de deux entités intermédiaires liées respectivement audit expéditeur et audit destinataire, **caractérisé en ce qu'**il comporte :
- un moyen de communication entre l'expéditeur et son entité intermédiaire, au libre choix de l'entité intermédiaire et/ou de l'expéditeur ;
- un moyen de traitement de l'information par l'entité intermédiaire de l'expéditeur sur la base d'une information formatée et sécurisée, sous la forme d'un message électronique dont les adresses électroniques, (du type adresses de courriel ou d'URL) incluent dans le radical du nom de domaine :
o Soit un terme ou expression « commerciale » du type marque définissant ou correspondant au procédé de communication mis en oeuvre par les entités intermédiaires.
o Soit un terme descriptif, de préférence normé, de la nature de l'opération correspondant au message électronique envoyé/reçu, tel que avis d'échéance, relance, facture, effets de commerce, autorisation de prélèvement, réclamations, échéance, acceptation de devis.
- un moyen de communication, de l'information formatée et sécurisée, entre l'entité intermédiaire de l'expéditeur et l'entité intermédiaire du destinataire ; et
- un moyen de communication entre l'entité intermédiaire du destinataire et le destinataire au libre choix de l'entité intermédiaire et/ou du destinataire.
